# EUROPEAN PATENT APPLICATION

(11) **EP 3 187 658 A1**
(43) Date of publication of application: **05.07.2017**
(21) Application number: 14900598.5
(22) Date of filing: 12.09.2014
(51) Int. Cl.: E01D 19/02

(54) **FORM STRUCTURE OF PRECAST SEGMENT STRUCTURE AND CONSTRUCTION METHOD THEREOF**

(30) Priority: 29.08.2014 KR 20140114433
(71) Applicant: POSCO, Gyeongsangbuk-do 790-300 (KR)
(72) Inventor: LEE, Dae-Yong, Incheon 406-840 (KR)
(74) Representative: Potter Clarkson LLP
(86) International application number: PCT/KR2014/008540
(87) International publication number: WO 2016/032041

(57) **Abstract**

The present invention provides a form structure employed for a precast segment structure that is formed by stacking segment units upward, each of which is formed by circumferentially connecting a plurality of precast segments. The form structure comprises: an inner form disposed inside a circumferential connection part between adjacent precast segments; an inner frame provided to support the inner surface of the inner form; a frame support part provided to support the inner frame formed upwardly; an outer form disposed outside the circumferential connection part between the adjacent precast segments; and a fastening member provided to support the outer surface of the outer form.

## Description

### [Technical Field]

The present disclosure relates to a form structure employed for a precast segment structure, and more specifically, a form structure employed for a precast segment structure, which may be easily and circumferentially connected to the precast segment structure in the field.

### [Background Art]

As the size of bridges and wind turbines grows larger, the size of support structures that support them is also increasing.

The use of a circular hollow structure for the reduction of cross section and weight is increasing in the use of concrete material, having the advantage of compressive load resistance in support structures.

However, a conventional method using a circular hollow structure may be accompanied by restrictions during transportation thereof. Generally, the maximum height of unit hollow structures that may be transported in Korea is 4.2 m when low floor trailers are used. Therefore, there may be restrictions on transporting large-scale structures, such as wind towers, having unit hollow structures with a height greater than 4.2 m and having a large diameter cross-section.

Therefore, in order to improve the road transportation convenience of large circular hollow structures and reduce the construction period in the field, precast concrete panel field assembling methods have been actively studied, instead of concrete field casting methods.

Particularly, in the case of concrete precast piers or wind tower structures having a large diameter cross section, a method of dividing a precast structure in a circumferential direction thereof, transporting it and assembling it in the field, is proposed as an alternative.

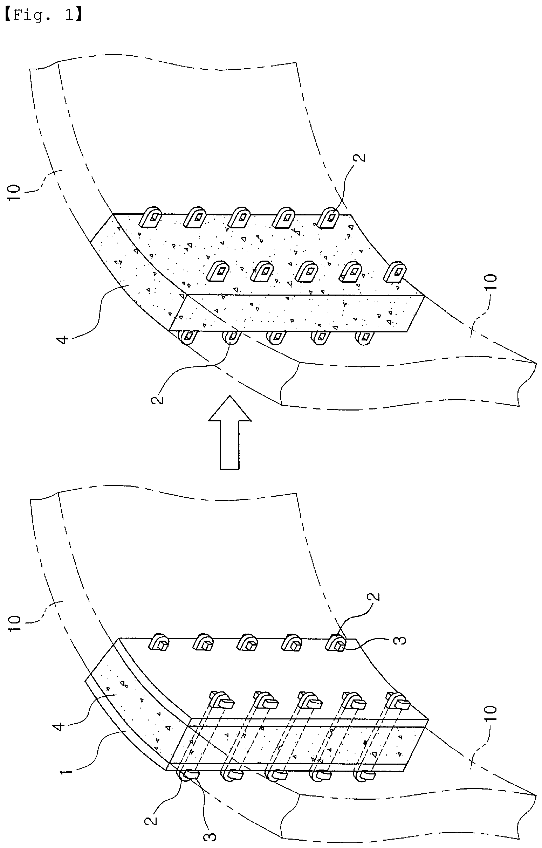

As illustrated in FIG. 1, in the related art a plurality of fixing bars 2 are disposed inside concrete to be poured into a grout part 4, forming a connection part between precast segments 10 or inside the grout part 4 in a longitudinal direction thereof, a plurality of form panels 1 are disposed on both sides of the grout part 4, and fixing pins 3 are fastened to both ends of the fixing bar 2, passing through the form panel 1, to secure the form panel 1 to the grout part 4.

By pouring concrete or grout into the form panel 1 fixed as described above and then releasing the form panel 1 through a curing process for a predetermined period, two precast segments 10 arranged on left and right sides of the fixed form panel 1 are connected to each other, thereby completing a segment unit 20.

However, in this method, since both ends of the fixing bar 2, passing through the grout part 4 after the above construction, are drawn out to a certain length from the outer surface of the grout part 4, the appearance thereof may not be aesthetically pleasing. Further, in the case of repeatedly receiving a dynamic load such as a wind tower, the fixing bar 2 may be corroded by rainwater or the like that has flowed into between the fixing bar 2 and the concrete. Moreover, the strength of the connection part between the precast segments 10 may be weakened due to a stress concentration phenomenon. Thus, the risk of fatigue fracture of the precast structure may be increased.

In order to solve such a problem, both ends of the fixing bar 2 protruding from the outer surface of the concrete need to be cut. In this case, a large number of workers, working in a relatively high location, may be required for the cutting work, and the cutting work may be considerably costly and time-consuming.

### [Disclosure]

### [Technical Problem]

The present disclosure is made by recognizing at least one requirement or problem that may occur in a form structure of the related art as described above.

An aspect of the present disclosure may provide a form structure in which circumferential connection work of precast segments may be easily performed in the field by a method of pressing and supporting a form disposed on a connection part between the precast segments, externally and internally.

An aspect of the present disclosure may provide a form structure which may improve the aesthetic appearance of a finished surface of the connection part by moving away from a related art connection method in which a fixing bar fixing a form to a connection part between precast segments is used, and which may reduce corrosion due to the inflow of rainwater or the like through the fixing bar, and the risk of fatigue fracture of the connection part due to a stress concentration phenomenon.

An aspect of the present disclosure may provide a form structure which does not require the elimination of the fixing bar protruding from an outer surface of the connection part between the related art precast segments to avoid the use of workers, working in a relatively high location, thereby reducing construction costs and shortening a construction period.

An aspect of the present disclosure may provide a form structure which may facilitate the internal installation and deconstruction of a precast segment structure, thereby shortening a construction period in the field.

### [Technical Solution]

According to an aspect of the present disclosure, a form structure, employed for a precast segment structure that is formed by stacking segment units upwardly, each of which is formed by circumferentially connecting a plurality of precast segments, the form structure includes: an inner form circumferentially disposed inside a connection part between the precast segments adjacent to each other; an inner frame provided to support an inner surface of the inner form; a frame support part provided to support the inner frame formed upwardly; an outer form circumferentially disposed outside the connection part between the precast segments adjacent to each other; and a fastening member provided to support an outer surface of the outer form.

The inner frame may include: a ring frame provided to be in contact with the inner surface of the inner form; and a support frame provided to traverse an internal space of the ring frame, and reinforcing the ring frame.

The ring frame may be disposed on a joint between the segment units stacked upwardly, and the support frame may be disposed in a position corresponding to that of the connection part between the precast segments.

Each of the segment units may be provided as a tapered member whose cross section is reduced upwardly toward an upper side thereof, and the ring frame may be provided as a tapered member whose cross section is reduced upwardly toward an upper side thereof, and may be provided to press and support the inner form by extension of the frame support part.

The support frame may include: a plurality of horizontal plates provided to horizontally traverse the internal space of the ring frame and disposed upwardly, parallel to each other; and a vertical plate connecting the horizontal plates, that are adjacent to each other.

The support frame may be radially and horizontally disposed from a center of the internal space of the ring frame.

The support frame may include: a plurality of first reinforcing frames disposed horizontally parallel to each other in the internal space of the ring frame; and a plurality of second reinforcing frames disposed parallel to each other to intersect the first reinforcing frames at a right angle.

The frame support part may be provided to be able to adjust a distance between the inner frames disposed upwardly, adjacent to each other.

The frame support part may include: a first support part having one side in contact with the inner frame disposed upwardly above the first support part and the other side provided with a first thread; and a second support part having one side in contact with the inner frame disposed upwardly below the second support part and the other side provided with a second thread opposite to the first thread; and a coupler member connecting the first support part to the second support part. The first support part and the second support part may include extended support parts provided on portions thereof contacting the support frame, respectively.

Each of the segment units may include the connection parts circumferentially formed to be spaced apart from each other, each of the connection parts may have the inner form disposed thereinside and the outer form disposed thereoutside, the inner form may be provided as a plurality of inner forms and the inner forms are supported integrally by the inner frame, the outer form may be provided as a plurality of outer forms, and the outer forms are supported integrally by the fastening member.

The inner form and the outer form may be provided as single members continuously disposed across at least two of the segment units stacked upwardly.

The fastening member may be disposed in an installation groove circumferentially formed in the outer form.

According to another aspect of the present disclosure, a construction method of a precast segment structure using the form structure, the construction method may include: (a) forming the segment units by circumferentially disposing the precast segments and stacking the segment units upwardly; (b) disposing the inner form inside the connection part between the precast segments and disposing the inner frame to support the inner surface of the inner form; (c) installing the frame support part to support the inner frame disposed upwardly; (d) disposing the outer form outside the connection part between the precast segments, and disposing the fastening member to support the outer surface of the outer form; (e) filling the connection part with concrete or grout, and curing the concrete or the grout; and (f) dismantling the inner frame, the frame support part, the fastening member, and the outer form.

### [Advantageous Effects]

As described above, according to an embodiment, a connection part between precast segments may be easily and circumferentially constructed in the field by a method of pressing and supporting an inner form and an outer form disposed on the connection part between the precast segments, by an inner frame disposed inside the connection part and a fastening member disposed outside the connection part, thereby improving constructability of the form structure.

According to an embodiment, by moving away from a related art connection method in which a fixing bar fixing a form to a connection part between precast segments is used, the aesthetic appearance of a finished surface of the connection part may be improved, and corrosion due to the inflow of rainwater or the like through the fixing bar and the risk of fatigue fracture of the connection part due to a stress concentration phenomenon may be reduced.

According to an embodiment, the elimination of the fixing bar protruding from an outer surface of the connection part between the related art precast segments may not be required to avoid the use of workers, working in a relatively high location, thereby reducing construction costs and shortening a construction period.

According to an embodiment, a ring frame may be disposed on a joint between the segment units stacked upwardly to function to set and align the joint between the segment units stacked upwardly, thereby reducing an occurrence of construction errors in the joint between the segment units.

According to an embodiment, a support frame may be disposed in a position corresponding to that of the connection part between the precast segments, to more stably support a load, transferred from the inner form, when grout is poured into the connection part, through the ring frame and the support frame, thereby improving structural stability.

According to an embodiment, the segment units and the ring frame may be provided as tapered members whose cross sections are reduced toward upper sides thereof, and a frame support part may be configured to adjust a distance between the inner frames, thereby enabling the ring frame to press and support the inner form more easily by extension of the frame support part.

According to an embodiment, inner forms may be supported integrally by the inner frame, and outer forms may be supported integrally by the fastening member, so that a plurality of connection parts formed in the segment unit may be constructed integrally, thereby significantly reducing an occurrence of construction errors, and shortening a construction period through easy installation and dismantlement of the inner form and the outer form disposed inside and outside a precast segment structure, respectively.

### [Description of Drawings]

FIG. 1 is a view illustrating an installation method of a form panel using a related art fixing bar;
FIG. 2 is a plan view of a form structure and a perspective view of an inner frame according to an embodiment;
FIG. 3 is a cross-sectional view of a form structure according to an embodiment;
FIGS. 4A and 4B are perspective views illustrating various embodiments of an inner frame applied to the form structure of FIG. 3;
FIGS. 5A and 5B are cross-sectional views illustrating a state in which an inner frame presses an inner form, depending on the extension of a frame support part;
FIG. 6 is a cross-sectional view of a form structure according to another embodiment; and
FIGS. 7A, 7B, and 7C are perspective views illustrating various embodiments of an inner frame applied to the form structure of FIG. 6.

### [Best Mode for Invention]

Hereinafter, with reference to the drawings, a form structure 100 according to an embodiment will be described in detail.

Referring to FIGS. 1 through 7, the form structure 100 according to an embodiment may include an inner form 200, an inner frame 300, a frame support part 400, an outer form 500, and a fastening member 600.

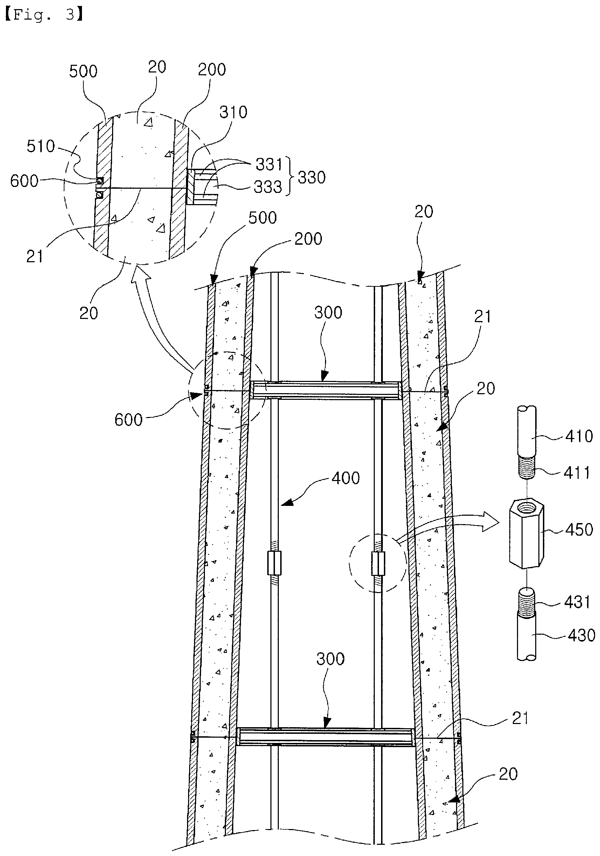

As illustrated in FIG. 3, the form structure 100 may be employed for a precast segment structure that is formed by stacking segment units 20 upwardly, each of which is formed by circumferentially connecting a plurality of precast segments 10.

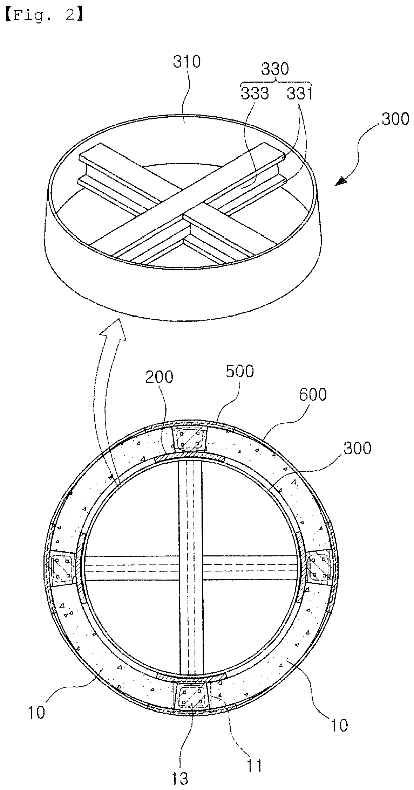

As illustrated in FIGS. 2 and 3, the form structure 100 may include the inner form 200 circumferentially disposed inside a connection part 11 between the adjacent precast segments 10, the inner frame 300 provided to support an inner surface of the inner form 200, the frame support part 400 provided to support the inner frame 300 formed upwardly, the outer form 500 circumferentially disposed outside the connection part 11 between the adjacent precast segments 10, and the fastening member 600 provided to support an outer surface of the outer form 500.

As illustrated in FIG. 2, the inner form 200 may be circumferentially disposed inside the connection part 11 between the precast segments 10.

The inner frame 300 may support the inner surface of the inner form 200 circumferentially disposed inside the connection part 11 between the precast segments 10.

The frame support part 400 may be a member disposed upwardly to support the inner frame 300. Frame support parts 400 may be disposed upwardly to be spaced apart from each other, and may be provided to support the inner frame 300.

The outer form 500 may be circumferentially disposed outside the connection part 11 between the precast segments 10, and the fastening member 600 may be disposed on the outer surface of the outer form 500 to support the outer form 500.

The fastening member 600 may be disposed in an installation groove 510 circumferentially formed in the outer form 500.

As illustrated in FIG. 2, the inner frame 300 may include a ring frame 310 provided to be in contact with the inner surface of the inner form 200, and a support frame 330 provided to traverse an internal space of the ring frame 310 to reinforce the ring frame 310.

The ring frame 310 may support the inner surface of the inner form 200 circumferentially disposed inside the connection part 11 between the precast segments 10.

The support frame 330 may be provided to be in contact with an inner circumferential surface of the ring frame 310 to support a load, transferred from the inner form 200, which is provided to be in contact with the connection part 11 between the precast segments 10, to the ring frame 310.

As illustrated in FIG. 3, the ring frame 310 may be disposed on a joint 21 between the segment units 20 stacked upwardly.

The ring frame 310 may function to set and align the position at the joint 21 between the segment units 20 stacked upwardly to reduce an occurrence of construction errors in the joint 21 between the segment units 20.

As illustrated in FIG. 2, the support frame 330 may be disposed in a position corresponding to that of the connection part 11 between the precast segments 10.

When grout is poured into the connection part 11, the load transferred from the inner form 200 may be more stably supported through the ring frame 310 and the support frame 330, and structural stability may be improved.

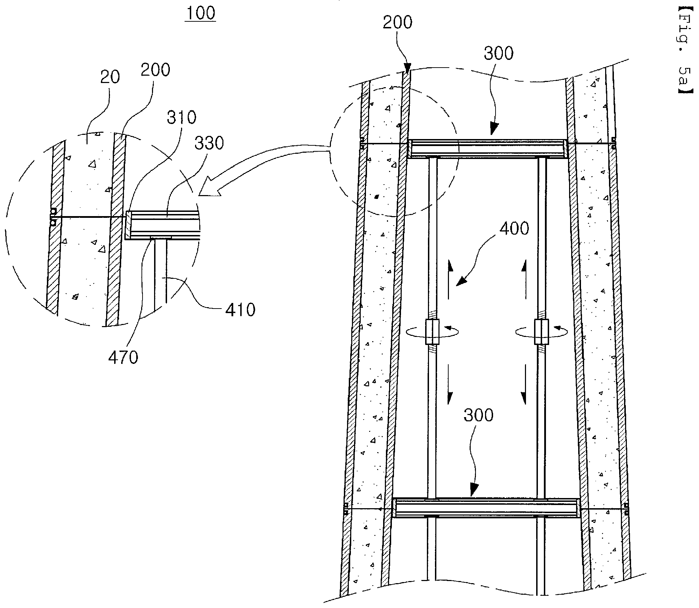

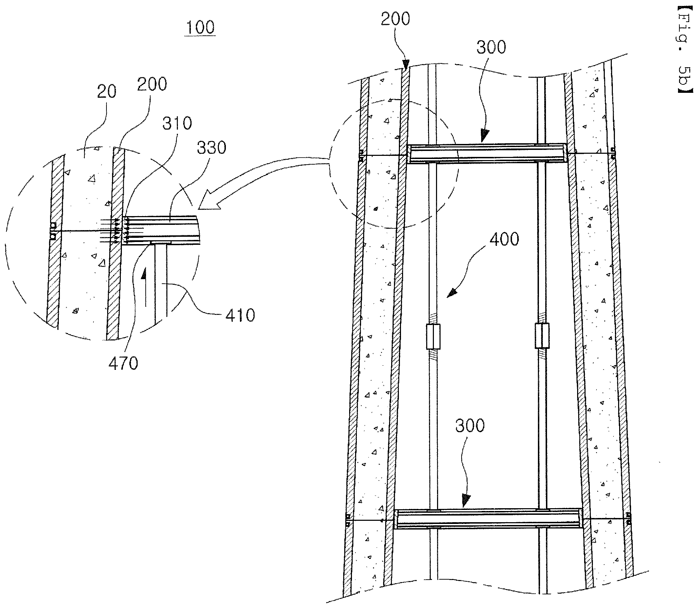

As illustrated in FIGS. 5A and 5B, the segment unit 20 may be provided as a tapered member whose cross section is reduced upwardly toward an upper side thereof, the ring frame 310 may be provided as a tapered member whose cross section is reduced upwardly toward an upper side thereof, and the ring frame 310 may be provided to press and support the inner form 200 by extension of the frame support part 400.

As illustrated in FIG. 3, the segment unit 20 and the ring frame 310 may be provided as the tapered members whose cross sections are reduced upwardly toward the upper sides thereof, and the ring frame 310 may be provided to have a shape corresponding to that of the inner form 200 vertically supporting the joint 21 between the segment units 20.

Referring to FIG. 5A, a ring frame 310 disposed below another ring frame 310 is in a state of pressing and supporting the inner form 200 disposed on the joint 21 between the segment units 20 by extension of the frame support part 400 disposed below the ring frame 310. The other ring frame 310 disposed above the ring frame 310 is in a state before pressing and supporting the inner form 200, before extension of the frame support part 400, and, as illustrated in an enlarged view of FIG. 5A, the inner form 200 and the ring frame 310 may be disposed to be spaced apart from each other at a regular distance.

Referring to FIG. 5B, the other ring frame 310 disposed above the ring frame 310 is in a state of being raised, by extension of the frame support part 400 disposed below the other ring frame 310, and of pressing and supporting the inner form 200, while being disposed on the joint 21 between the segment units 20.

As described above, the segment unit 20 and the ring frame 310 may be provided as the tapered members whose cross sections are reduced upwardly toward the upper sides thereof, and the frame support part 400 may be configured to adjust a distance between inner frames 300. Thus, the ring frame 310 may press and support the inner form 200 more easily by extension of the frame support part 400.

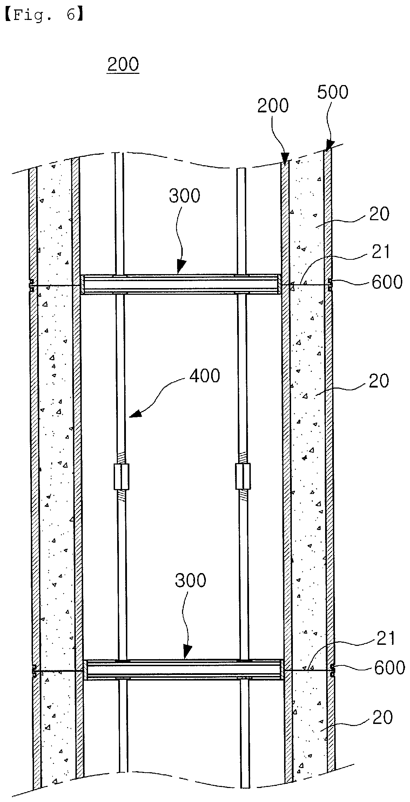

As illustrated in FIG. 6, the segment unit 20 may be provided to have the same cross sectional area upward, and the ring frame 310 disposed on the joint 21 between the segment units 20 stacked upwardly may be provided to have the same cross sectional area upward.

In this case, as illustrated in FIGS. 5A and 5B, there may be a disadvantage that the ring frame 310 only holds the inner form 200 without pressing and supporting the inner form 200. However, the segment unit 20 may have the same cross sectional area upward, so that the ring frame 310 disposed on the joint 21 between the segment units 20 may have the same size, thereby constructing the form structure 100 with a modularized ring frame 310. Thus, manufacturing and construction costs of the form structure 100 may be reduced.

As illustrated in FIGS . 7A through 7C, various embodiments of the ring frame 310 disposed on the joint 21 between the segment units 20, having the same cross- sectional area upward, may be shown. At this time, the ring frame 310 may be provided to have the same cross sectional area upward.

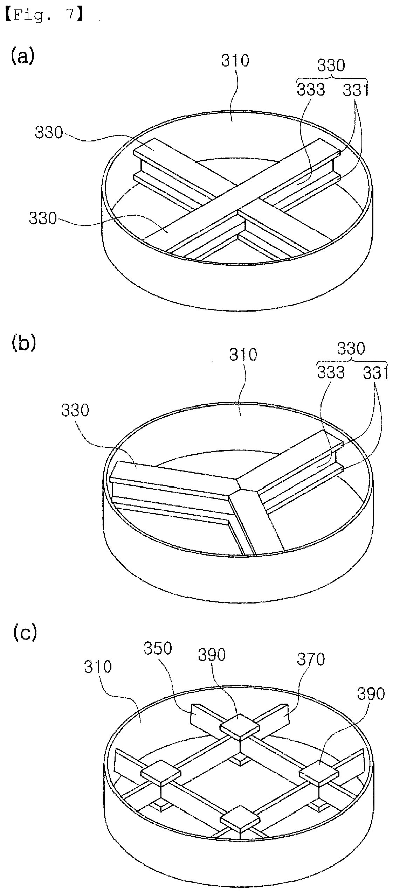

As illustrated in FIG. 7C, the support frame 330 may include a plurality of first reinforcing frames 350, horizontally disposed, parallel to each other in the inner surface of the ring frame 310, and a plurality of second reinforcing frames 370 disposed parallel to each other to intersect the first reinforcing frames 350 at a right angle.

The first reinforcing frames 350 and the second reinforcing frames 370 may be vertically disposed to intersect each other, so that the support frame 330 may be disposed in cross form in the inner surface of the ring frame 310.

An installation part 390, on which the frame support part 400 may be disposed, may be provided on an upper side of an intersection between the first and second reinforcing frames 350 and 370.

The support frame 330 may be provided to horizontally traverse the inner surface of the ring frame 310, and may include a plurality of horizontal plates 331 disposed upwardly, parallel to each other, and a vertical plate 333, connecting the adjacent horizontal plates 331.

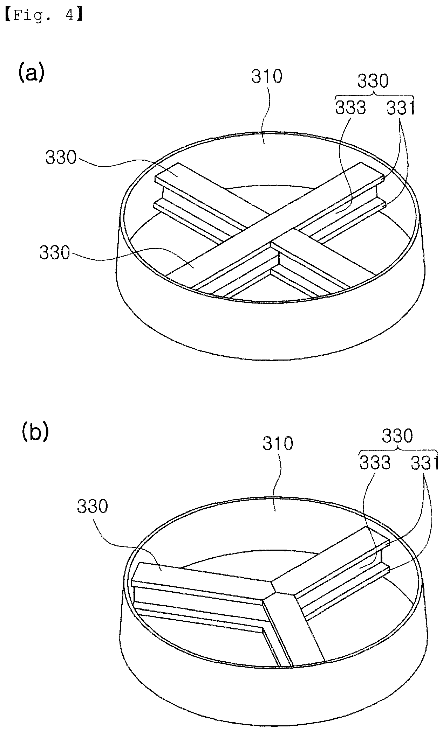

As illustrated in FIGS. 4A and 4B, the support frame 330 may be provided as an H-beam member, including two horizontal plates 331 and a vertical plate 333 connecting the two horizontal plates 331, but is not limited thereto. The support frame 330 may also be configured to have a shape in which three or more horizontal plates 331 are disposed upwardly, parallel to each other, and vertical plates 333 are respectively disposed among the three or more horizontal plates 331, adjacent to one another.

The horizontal plate 331 may have a protruding portion formed thereon to allow an end portion of the frame support part 400 to be fixed thereto, and an extended support part 470 of the frame support part 400 may be disposed in a recess of the horizontal plate 331 surrounded by the protruding portion, to be fixed.

The installation part 390 may effectively prevent the frame support part 400 from being separated, and as an installation position of the frame support part 400 is predetermined, a time required for fixing and positioning of the frame support part 400 may be reduced, thereby shortening a construction period.

As illustrated in FIG. 4A, the support frame 330 may be provided as a cross type member formed by passing through a center of the inner surface of the ring frame 310.

Specifically, the segment unit 20 may include four precast segments 10, and the support frame 330 may be disposed in cross form in a direction corresponding to those of four connection parts 11. That is, the support frame 330 may include a first support frame 330, disposed to connect the connection parts 11 opposing each other, and a second support frame 330, disposed to intersect the first support frame 330 at a right angle, and the support frame 330 may be disposed in cross form.

As illustrated in FIG. 4B, the support frame 330 may be radially disposed from the center of the inner surface of the ring frame 310, and the horizontal plate 331 and the vertical plate 333 forming the support frame 330 may be horizontally and radially disposed from the center of the inner surface of the ring frame 310.

Specifically, the segment unit 20 may include three precast segments 10, and the support frame 330 may be radially disposed in a direction corresponding to those of three connection parts 11.

A joining surface between the support frame 330 and the ring frame 310 may be disposed on a position corresponding to that of the connection part 11.

As illustrated in FIGS. 5A and 5B, the frame support part 400 may be provided to support the inner frame 300 formed upwardly.

The frame support part 400 may be disposed between the adjacent inner frames 300 disposed upward, and may be provided to be able to adjust the distance between the inner frames 300 disposed adjacent to each other.

Also, the frame support part 400 may have no inner frame 300 disposed therebelow, as in a frame support part 400 disposed lowermost, and the inner frame 300 may be seated on the frame support part 400.

As illustrated in FIG. 3, the frame support part 400 may include a first support part 410, a second support part 430, and a coupler member 450.

The frame support part 400 may include the first support part 410 having one side provided to be in contact with the inner frame 300 disposed upwardly thereabove, and the other side provided with a first thread 411, a second support part 430 having one side provided to be in contact with the inner frame 300 disposed upwardly therebelow, and the other side provided with a second thread 431 opposite to the first thread 411, and the coupler member 450 connecting the first support part 410 to the second support part 430.

The coupler member 450 may include a coupler body, a first connection part coupled to the first thread 411, and a second connection part coupled to the second thread 431.

The length of the frame support part 400 may be adjusted by rotation of the coupler member 450, coupled to the first and second support parts 410 and 430 having the first and second threads 411 and 431 opposite to each other.

Depending on the rotation of the coupler member 450, a distance between the first and second threads 411 and 431 may be adjusted, so that a distance between the inner frames 300 disposed above and below the frame support part 400 may be controlled while adjusting the length of the frame support part 400.

As illustrated in FIGS. 5A and 5B, the first and second support parts 410 and 430 may include extended support parts 470 formed on portions thereof contacting the support frame 330.

As illustrated in FIG. 2, the segment unit 20 may include connection parts 11 circumferentially formed to be spaced apart from each other, the inner form 200 and the outer form 500 may be disposed inside and outside each of the connection parts 11, respectively, inner forms 200 may be provided to be supported integrally by the inner frame 300, and outer forms 500 may be provided to be supported integrally by the fastening member 600.

The inner forms 200 may be configured to be supported integrally by the inner frame 300, and the outer forms 500 may be configured to be supported integrally by the fastening member 600 to integrally construct the connection parts 11 formed in the segment unit 20, thereby significantly reducing an occurrence of construction errors, and to facilitate installation and dismantlement of the inner form 200 and the outer form 500 disposed inside and outside the precast segment structure, respectively, thereby shortening a construction period.

As illustrated in FIGS. 5A and 5B, the inner form 200 and the outer form 500 may be formed to have a circumferential shape corresponding to the height of the connection part 11 between the segment units, and may be disposed on the connection part 11 between the segment units 20, and a horizontal boundary between the inner forms 200 disposed on the connection part 11 between the segment units 20 may be supported by the ring frame 310.

Also, although not illustrated, the inner form 200 and the outer form 500 may be provided as single members continuously disposed across at least two segment units stacked upwardly.

That is, the inner form 200 and the outer form 500 may be formed of single members disposed across the segment units 20 stacked upwardly.

As illustrated in an enlarged view of FIG. 3, the fastening member 600 may be disposed in the installation groove 510 circumferentially formed in the outer form 500. The installation groove 510 may be formed in a region adjacent to the joint 21 between the segment units 20 stacked upwardly, and when the outer form 500 is formed to have a circumferential shape corresponding to the height of the connection part 11 between the segment units 20, installation grooves 510 may be formed in an outer form 500 disposed above the joint 21 and an outer form 500 disposed below the joint 21, respectively.

The installation groove 510 may be disposed in the region adjacent to the joint 21 between the segment units 20, due to the fact that when grout is poured into the connection part 11, a larger stress may be generated at a height corresponding to that of the joint 21 between the segment units 20.

As illustrated in FIG. 3, an embodiment is shown in which a single installation groove 510 may be formed in each of upper and lower end portions of the outer form 500, but the number of installation grooves 510 is not limited thereto, plural columns of installation grooves 510 may be formed, and a plurality of fastening members 600 may be disposed in each of upper and lower end portions of the outer form 500.

Next, a construction method of the precast segment structure will be described in detail with reference to FIGS. 1 through 7C.

Referring to FIGS. 1 through 7C, the construction method according to an embodiment may include operations (a) to (f).

The construction method may construct the precast segment structure using the form structure 100 described above.

The construction method may include (a) forming the segment units 20 by circumferentially disposing the precast segments 10, and stacking the segment units 20 upwardly, (b) disposing the inner form 200 inside the connection part 11 between the precast segments 10, and disposing the inner frame 300 to support the inner surface of the inner form 200; (c) disposing the frame support part 400 to support the inner frame 300 disposed upwardly; (d) disposing the outer form 500 outside the connection part 11 between the precast segments 10, and disposing the fastening member 600 to support the outer surface of the outer form 500; (e) filling the connection part 11 with concrete or grout, and curing the concrete or the grout; and (f) dismantling the inner frame 300, the frame support part 400, the fastening member 600, and the outer form 500.

First, in operation (a), the precast segments 10 may be disposed to be spaced apart from each other at a regular distance such that the precast segments 10 may be circumferentially disposed to form a shape of the segment unit 20 and such that the circumferentially adjacent precast segments 10 may form the connection part 11. The segment units 20, formed in the same manner as mentioned above, may be stacked upwardly.

Next, in operation (b), as illustrated in FIG. 2, the inner forms 200 may be disposed inside a plurality of (four) connection parts 11 formed in the segment unit 20, respectively, and the inner frame 300 may be disposed to support the inner surfaces of the inner forms 200 disposed on the connection parts 11 circumferentially disposed to be spaced apart from each other at the regular distance.

At this time, the inner forms 200 disposed on the connection parts 11 may be configured to be supported by the ring frame 310 of a single inner frame 300.

The precast segment 10 may be provided as a tapered member whose cross section is reduced upwardly toward an upper side thereof, the inner frame 300 may include the ring frame 310 provided to be in contact with the inner surface of the inner form 200, and may include the support frame 330 provided to traverse the internal space of the ring frame 310 to reinforce the ring frame 310, and the ring frame 310 may be provided as the tapered member whose cross section is reduced upwardly toward the upper side thereof, and may be provided to press and support the inner form 200 by extension of the frame support part 400.

Next, in operation (c), as illustrated in FIG. 3, the frame support part 400 may be disposed to support the inner frame 300 formed upwardly.

As illustrated in FIGS. 5A and 5B, the frame support part 400 may be provided to support the inner frame 300 formed upwardly.

The frame support part 400 may be disposed between the adjacent inner frames 300 disposed upwardly, and may be provided to be able to adjust the distance between the inner frames 300 disposed adjacent to each other.

Also, the frame support part 400 may have no inner frame 300 disposed therebelow, as in a frame support part 400 disposed lowermost, and the inner frame 300 may be seated on the frame support part 400.

Referring to FIG. 5A, the ring frame 310 disposed below the other ring frame 310 is in the state of pressing and supporting the inner form 200 disposed on the joint 21 between the segment units 20 by extension of the frame support part 400 disposed below the ring frame 310. The other ring frame 310 disposed above the ring frame 310 is in the state before pressing and supporting the inner form 200 before extension of the frame support part 400, and, as illustrated in the enlarged view of FIG. 5A, the inner form 200 and the ring frame 310 may be disposed to be spaced apart from each other at the regular distance.

Referring to FIG. 5B, the other ring frame 310 disposed above the ring frame 310 is in the state of being raised by extension of the frame support part 400 disposed below the other ring frame 310, and of pressing and supporting the inner form 200 while being disposed on the joint 21 between the segment units 20.

As described above, the segment unit 20 and the ring frame 310 may be provided as the tapered members whose cross sections are reduced upwardly toward the upper sides thereof, and the frame support part 400 may be configured to be able to adjust the interval between the inner frames 300. Thus, the ring frame 310 may press and support the inner form 200 more easily by extension of the frame support part 400.

Next, in operation (d), as illustrated in FIG. 2, the outer forms 500 may be disposed outside the plurality of (four) connection parts 11 formed in the segment unit 20, respectively, and the fastening member 600 may be disposed to support the outer surfaces of the outer forms 500 disposed on the connection parts 11 circumferentially disposed to be spaced apart from each other at the regular distance. At this time, the fastening member 600 may be disposed in the installation groove 510 circumferentially formed in the outer form 500.

At this time, the outer forms 500 disposed on the connection parts 11 may be configured to be supported by a single fastening member 600.

Next, in operation (e), as illustrated in FIG. 2, a grout portion 13 may be circumferentially formed in the connection part 11 between the precast segments 10 by filling the connection part 11 with concrete or grout and curing the concrete or the grout.

Next, in operation (f), after the grout is poured into the connection part 11, when the grout is fully cured, the form structure 100, including the inner frame 300, the frame support part 400, the fastening member 600, and the outer form, 500 may be dismantled.

The inner form 200 may be removed in a state in which the distance between the inner form 200 and the ring frame 310 is maintained by eliminating pressure on the inner frame 300 through reducing the length of the frame support part 400.

As described above, a form structure of a precast segment structure and a construction method thereof according to an embodiment may provide breakthrough advantages in terms of easily and circumferentially constructing a connection part between precast segments in the field by a method of pressing and supporting an inner form and an outer form, disposed on the connection part between the precast segments, by an inner frame disposed inside the connection part and a fastening member disposed outside the connection part, thereby improving constructability of a circular hollow structure and preventing construction errors in the connection part.

## Claims

1. A form structure, employed for a precast segment structure that is formed by stacking segment units upwardly, each of which is formed by circumferentially connecting a plurality of precast segments, the form structure comprising:
an inner form circumferentially disposed inside a connection part between the precast segments adjacent to each other;
an inner frame provided to support an inner surface of the inner form;
a frame support part disposed upwardly, and provided to support the inner frame;
an outer form circumferentially disposed outside the connection part between the precast segments adjacent to each other; and
a fastening member provided to support an outer surface of the outer form.

2. The form structure of claim 1, wherein the inner frame includes:
a ring frame provided to be in contact with the inner surface of the inner form; and
a support frame provided to traverse an internal space of the ring frame, and reinforcing the ring frame.

3. The form structure of claim 2, wherein the ring frame is disposed on a joint between the segment units stacked upwardly, and
the support frame is disposed in a position corresponding to a position of the connection part between the precast segments.

4. The form structure of claim 2, wherein each of the segment units is provided as a tapered member whose cross section is reduced upwardly toward an upper side thereof, and
the ring frame is provided as a tapered member whose cross section is reduced upwardly toward an upper side thereof, and is provided to press and support the inner form by extension of the frame support part.

5. The form structure of claim 2, wherein the support frame includes:
a plurality of horizontal plates provided to horizontally traverse the internal space of the ring frame, and disposed upwardly, parallel to each other; and
a vertical plate connecting the horizontal plates, that are adjacent to each other.

6. The form structure of claim 2, wherein the support frame is radially and horizontally disposed from a center of the internal space of the ring frame.

7. The form structure of claim 2, wherein the support frame includes:
a plurality of first reinforcing frames disposed horizontally parallel to each other in the internal space of the ring frame; and
a plurality of second reinforcing frames disposed parallel to each other to intersect the first reinforcing frames at a right angle.

8. The form structure of claim 4, wherein the frame support part is provided to be able to adjust a distance between the inner frames disposed upwardly adjacent to each other.

9. The form structure of claim 8, wherein the frame support part includes:
a first support part having one side being in contact with the inner frame disposed upwardly above the first support part and the other side provided with a first thread;
a second support part having one side being in contact with the inner frame disposed upwardly below the second support part and the other side provided with a second thread opposite to the first thread; and
a coupler member connecting the first support part to the second support part.

10. The form structure of claim 9, wherein the first support part and the second support part include extended support parts provided on portions thereof contacting the support frame, respectively.

11. The form structure of claim 2, wherein each of the segment units includes the connection parts circumferentially formed to be spaced apart from each other,
each of the connection parts has the inner form disposed thereinside and the outer form disposed thereoutside,
the inner form is provided as a plurality of inner forms and the inner forms are supported integrally by the inner frame, and
the outer form is provided as a plurality of outer forms and the outer forms are supported integrally by the fastening member.

12. The form structure of claim 1, wherein the inner form and the outer form are provided as single members continuously disposed across at least two of the segment units stacked upwardly.

13. The form structure of claim 1, wherein the fastening member is disposed in an installation groove circumferentially formed in the outer form.

14. A construction method of a precast segment structure using the form structure described in any one of claims 1 through 13, the construction method comprising:
(a) forming the segment units by circumferentially disposing the precast segments, and stacking the segment units upwardly;
(b) disposing the inner form inside the connection part between the precast segments, and disposing the inner frame to support the inner surface of the inner form;
(c) disposing the frame support part to support the inner frame disposed upwardly;
(d) disposing the outer form outside the connection part between the precast segments, and disposing the fastening member to support the outer surface of the outer form;
(e) filling the connection part with concrete or grout, and curing the concrete or the grout; and
(f) dismantling the inner frame, the frame support part, the fastening member, and the outer form.
